# EUROPÄISCHE PATENTSCHRIFT

(11) **EP 3 536 950 B1**
(45) Veröffentlichungstag und Bekanntmachung des Hinweises auf die Patenterteilung: **18.05.2022**
(21) Anmeldenummer: 19160245.7
(22) Anmeldetag: 01.03.2019
(51) Int. Cl.: F03D 7/04, F03D 7/02, F03D 80/50

(54) **VERFAHREN UND SYSTEM ZUM WARTEN EINER WINDENERGIEANLAGE AUS EINER GRUPPE VON WINDENERGIEANLAGEN**
METHOD AND SYSTEM FOR PERFORMING MAINTENANCE ON A WIND TURBINE IN A GROUP OF WIND TURBINES
PROCÉDÉ ET SYSTÈME D'ENTRETIEN D'UNE ÉOLIENNE D'UN GROUPE D'ÉOLIENNES

(30) Priorität: 06.03.2018 DE 102018001763
(43) Veröffentlichungstag der Anmeldung: 11.09.2019
(73) Patentinhaber: Siemens Gamesa Renewable Energy Service GmbH, 20097 Hamburg (DE)
(72) Erfinder: Lütjen, Jan, 25585 Lütjenwestedt (DE); Thiessen, Dennis, 24783 Österrönfeld (DE)
(74) Vertreter: Glawe, Delfs, Moll

(56) Entgegenhaltungen:
- EP-A1- 2 955 368
- EP-A2- 2 631 472
- DE-A1-102013 210 090

## Beschreibung

Die Erfindung betrifft ein Verfahren und ein System zum Warten einer ersten Windenergieanlage aus einer Gruppe von Windenergieanlagen.

Um einen Wartungsvorgang an einer Windenergieanlage durchführen zu können, ist es in vielen Fällen erforderlich, die Windenergieanlage still zu setzen oder wenigstens mit reduzierter Leistung zu betreiben. Die damit verbundenen Ertragsverluste sind unerwünscht. Bekannt ist, für den Wartungsvorgang einen Zeitraum mit schwachem Wind auszuwählen. Die Ertragsausfälle, die sich durch den Stillstand einer Windenergieanlage ergeben, sind dann kleiner, als wenn der Stillstand in eine Phase starken Winds fällt, WO 2014/191067 A1. Diese Vorgehensweise hat den Nachteil, dass die Flexibilität beim Planen von Wartungsvorgängen erheblich eingeschränkt ist. Ein weiteres Verfahren zum Betreiben einer Windenergieanlage ist in EP 2 631 472 A2 offenbart.

Der Erfindung liegt die Aufgabe zugrunde, ein Wartungsverfahren und ein Wartungssystem vorzustellen, die eine größere Flexibilität beim Planen von Wartungsvorgängen ermöglichen, wobei hohe Ertragsausfälle vermieden werden. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Wartungsverfahren zum Warten einer ersten Windenergieanlage aus einer Gruppe von Windenergieanlagen wird ein zukünftiger Wartungszeitraum ermittelt, in dem eine Boostleistung der Gruppe von Windenergieanlagen größer ist als ein vorgegebener Schwellwert, wobei die Boostleistung sich aus einer für den zukünftigen Wartungszeitraum vorhergesagten Windgeschwindigkeit ergibt, die größer ist als Nennwindgeschwindigkeit. Nach Beginn des Wartungszeitraums wird die Leistung der ersten Windenergieanlage reduziert und es wird eine Boostleistung von einer Mehrzahl von Windenergieanlagen aus der Gruppe von Windenergieanlagen abgerufen. Bei der ersten Windenergieanlage wird eine Wartung durchgeführt.

Die Erfindung wendet sich ab von dem Gedanken, die Wartung so zu planen, dass der Leistungsausfall bei der von der Wartung betroffenen Windenergieanlage möglichst gering gehalten wird, und nimmt im Gegenteil ggf. sogar in Kauf, dass der Leistungsausfall bei dieser Windenergieanlage höher ist als erforderlich. Dieser an sich vermeidbare Leistungsausfall bei der zu wartenden Windenergieanlage kann gemäß der Erfindung akzeptiert werden, wenn gleichzeitig andere Windenergieanlagen eine Boostleistung zur Verfügung stellen können. Die Boostleistung kann genutzt werden, um den Leistungsausfall infolge der Wartung wenigstens teilweise und ggf. komplett auszugleichen.

Als Boostleistung wird derjenige Anteil der von der Windenergieanlage abgegebenen elektrischen Leistung bezeichnet, der über die Nennleistung hinausgeht. Hat beispielsweise eine Windenergieanlage eine Nennleistung von 3,0 MW, gibt zu einem bestimmten Zeitpunkt aber tatsächlich 3,1 MW ab, so liegt die Boostleistung bei 0,1 MW.

Die maximale Abgabe-Leistung, für die eine Windenergieanlage im normalen Betrieb unter genormten Bedingungen dauerhaft ausgelegt ist, wird als Nennleistung bezeichnet, vgl. IEC-Norm 61400. Dass eine Windenergieanlage bei Vorliegen bestimmter Bedingungen für einen begrenzten Zeitraum eine über die Nennleistung hinausgehende Boostleistung abgeben kann, ist bekannt, WO 2012/041 326 A2. Für nähere Erläuterungen, wie und unter welchen Bedingungen eine Boostleistung von einer Windenergieanlage abgerufen werden kann, wird auf dieses Dokument verwiesen.

Das erfindungsgemäße Verfahren beruht auf einer Prognose über eine zukünftig zur Verfügung stehende Boostleistung. Die Fähigkeit einer Windenergieanlage, eine Boostleistung bereitzustellen, hängt unmittelbar von der Windgeschwindigkeit ab. Die kleinste Windgeschwindigkeit, ab der die Windenergieanlage ihre Nennleistung abgeben kann, wird als Nennwindgeschwindigkeit bezeichnet. Notwendige Voraussetzung für die Abgabe einer Boostleistung ist eine Windgeschwindigkeit, die größer ist als die Nennwindgeschwindigkeit.

Eine definitive Aussage über die Windgeschwindigkeit zu einem zukünftigen Zeitraum ist nicht möglich, man ist auf Prognosen angewiesen. Es ist beim Betrieb von Windenergieanlagen üblich mit Prognosen für die Windverhältnisse zu arbeiten. Wird gemäß der Erfindung ermittelt, ob eine Windenergieanlage in einem zukünftigen Zeitraum eine Boostleistung zur Verfügung stellen kann, so bedeutet dies, dass die durch eine Prognose für den zukünftigen Zeitraum vorhergesagte Windgeschwindigkeit mit der Nennwindgeschwindigkeit verglichen wird. Ist die vorhergesagte Windgeschwindigkeit kleiner oder gleich der Nennwindgeschwindigkeit, so kann die Windenergieanlage keine Boostleistung bereitstellen. Ist die vorhergesagte Windgeschwindigkeit größer als die Nennwindgeschwindigkeit, ist eine Boostleistung von der Windenergieanlage verfügbar.

Aus der Kennlinie einer Windenergieanlage ist bekannt, welche Leistung bei welcher Windgeschwindigkeit von der Windenergieanlage abgerufen werden kann. Aus einer Windgeschwindigkeit oberhalb der Nennwindgeschwindigkeit kann damit unmittelbar ein bestimmter Wert für die Boostleistung abgeleitet werden, den eine Windenergieanlage bereitstellen kann. Liegt bei mehreren Windenergieanlagen eine Windgeschwindigkeit von mehr als Nennwindgeschwindigkeit an, so ergibt sich die Boostleistung der Gruppe von Windenergieanlagen als Summe der Boostleistungen der einzelnen Windenergieanlagen. Nicht erforderlich ist, dass die Windgeschwindigkeit bei allen Windenergieanlagen der Gruppe höher ist als Nennwindgeschwindigkeit. Geben einzelne Windenergieanlagen weniger als Nennleistung ab, so wird die Boostleistung der Gruppe von Windenergieanlagen dadurch nicht reduziert.

Ergibt sich anhand der Windprognose ein zukünftiger Zeitraum, in dem die Boostleistung größer ist als der vorgegebene Schwellwert, so kann dieser Zeitraum als Wartungszeitraum ausgewählt werden. Wartungszeitraum bedeutet, dass für diesen Zeitraum ein Wartungsvorgang an der ersten Windenergieanlage eingeplant werden kann.

Bei der Auswahl des zukünftigen Wartungszeitraums können außer der Windgeschwindigkeit weitere Parameter berücksichtigt werden, die einen Einfluss auf die Belastung der Windenergieanlagen haben können, bei denen Boostleistung zur Verfügung steht. Zu diesen Parametern können beispielsweise gehören die vorhergesagte Windturbulenz, ein vertikaler und/oder horizontaler Windgradient, ein Upflow, die Nachlaufbedingungen in der Gruppe von Windenergieanlagen (wake) und/oder die Luftdichte. Am Beispiel der Windturbulenz sind in einer Phase mit niedriger Windturbulenz die Windenergieanlagen allgemein geringer belastet als in Phasen mit hoher Windturbulenz. Entsprechende Zusammenhänge gibt es bei den anderen genannten Windparametern. Das Verfahren kann so durchgeführt werden, dass die Boostleistung nur abgerufen wird, wenn die sonstige Belastung (zum Beispiel durch Windturbulenz) nicht hoch ist.

Der Begriff Wartung ist im Zusammenhang der vorliegenden Erfindung so zu verstehen, dass er alle Arbeiten an eine Windenergieanlage umfasst, die planbar in einem zukünftigen Zeitraum durchgeführt werden können, wobei die Windenergieanlage bis zu dem zukünftigen Zeitraum in Betrieb bleiben kann. Typische Wartungsarbeiten setzen voraus, dass die von der Windenergieanlage abgegebene Leistung gegenüber der Nennleistung mindestens reduziert wird. In vielen Fällen wird die Windenergieanlage nach Beginn des Wartungszeitraums und vor Beginn des Wartungsvorgangs zum Stillstand gebracht, so dass die abgegebene Leistung sich auf null reduziert.

Eine Arbeit, die beispielsweise nach einem Ausfall einer Komponente der Windenergieanlage sofort durchgeführt werden muss, ist keine Wartung in diesem Sinne, weil es nicht möglich ist, eine solche Anlage bis zum Eintritt des zukünftigen Wartungszeitraums in Betrieb zu halten. Zur Wartung gehören beispielsweise in wiederkehrenden Abständen durchzuführende Arbeiten, wie der Austausch von Verschleißteilen oder der Wechsel von Schmierstoffen. Auch umfasst vom Begriff Wartung sind Untersuchungen, mit denen der Zustand einer bestimmten Komponente der Windenergieanlage ermittelt wird. Außerdem umfasst sind Reparaturarbeiten, die einen Aufschub bis zum Eintritt eines Wartungszeitraums dulden. Ein Beispiel dafür könnte sein, dass ein Condition-Monitoring-System (CMS) anzeigt, dass ein Getriebelager der Windenergieanlage eine voraussichtliche Lebensdauer von nur noch sechs Monaten hat. Ein Wartungszeitraum, der sich nach beispielsweise vier Monaten ergibt, kann zum Austausch des Getriebelagers genutzt werden.

Der anhand einer Windprognose ermittelte Wartungszeitraum liegt zunächst in der Zukunft. Die Zeitspanne zwischen dem Ermitteln des zukünftigen Wartungszeitraums und dem Eintritt des Wartungszeitraums kann zum Erstellen eines Wartungsplans genutzt werden, der für die erste Windenergieanlage einen in dem zukünftigen Wartungszeitraum durchzuführenden Wartungsvorgang festlegt. Die gemäß dem Wartungsplan vorgesehene Wartungsarbeit wird nach Beginn des Wartungszeitraums bei der ersten Windenergieanlage durchgeführt.

Für das erfindungsgemäße Verfahren ist es von Vorteil, wenn für die gesamte Dauer des Wartungsvorgangs eine hinreichende Menge an Boostleistung zur Verfügung steht. Es kann deswegen ein zukünftiger Wartungszeitraum ermittelt werden, der länger ist als die Dauer des bei der ersten Windenergieanlage durchzuführenden Wartungsvorgangs, wobei die Boostleistung während der gesamten Dauer des Wartungszeitraums größer ist als der vorgegebene Schwellwert.

Im Rahmen des erfindungsgemäßen Verfahrens kann auch ein Wartungszeitraum akzeptabel sein, der kürzer ist als die Dauer des Wartungsvorgangs, oder ein Wartungszeitraum, der zwar wenigstens so lang ist wie die Dauer des Wartungsvorgangs, bei dem aber die Boostleistung nicht während der gesamten Dauer des Wartungszeitraums größer ist als der vorgegebene Schwellwert. In beiden Fällen kann der Wartungszeitraum so ausgewählt werden, dass während wenigstens 40%, vorzugsweise wenigstens 60%, weiter vorzugsweise während wenigstens 80% der Dauer des Wartungsvorgangs die Boostleistung größer ist als der vorgegebene Schwellwert.

Die Boostleistung wird gemäß dem erfindungsgemäßen Verfahren genutzt, um den Leistungsausfall, der sich durch den Wartungsvorgang bei der ersten Windenergieanlage einstellt, wenigstens teilweise auszugleichen. Der vorgegebene Schwellwert für die Boostleistung kann in ein Verhältnis zu dem zu erwartenden Leistungsausfall bei der ersten Windenergieanlage gesetzt werden. Beispielsweise kann der vorgegebene Schwellwert so gewählt werden, dass der zu erwartende Leistungsausfall bei der ersten Windenergieanlage zu wenigstens 40 %, vorzugsweise zu wenigstens 80 %, weiter vorzugsweise zu wenigstens 100 % ausgeglichen werden kann.

Wenn die für den zukünftigen Wartungszeitraums vorhergesagte Windgeschwindigkeit für den Standort der ersten Windenergieanlage wenigstens so groß ist wie die Nennwindgeschwindigkeit der ersten Windenergieanlage, entspricht der zu erwartende Leistungsausfall der Nennleistung der ersten Windenergieanlage, falls die erste Windenergieanlage für den Wartungsvorgang stillgelegt wird. Wird der Wartungsvorgang bei verminderter Leistung der ersten Windenergieanlage durchgeführt, reduziert der zu erwartende Leistungsausfall sich entsprechend.

Den zu erwartenden Leistungsausfall durch Boostleistung auszugleichen, kann erleichtert werden, indem ein zukünftiger Wartungszeitraum ausgewählt wird, zu dem für den Standort der ersten Windenergieanlage eine Windgeschwindigkeit vorhergesagt ist, die kleiner ist als die Nennwindgeschwindigkeit der ersten Windenergieanlage. Beispielsweise kann ein zukünftiger Wartungszeitraums ausgewählt werden, in dem der zu erwartende Leistungsausfall kleiner ist als 100 %, vorzugsweise kleiner ist als 80 % der Nennleistung der ersten Windenergieanlage. Dies wird in erster Linie in Betracht kommen, wenn die erste Windenergieanlage einen größeren räumlichen Abstand zu anderen Windenergieanlagen der Gruppe hat. Möglich ist auch, dass es in der Gruppe von Windenergieanlagen Maschinen gibt, die eine niedrigere Nennwindgeschwindigkeit haben als die erste Windenergieanlage, oder dass an einigen Standorten der Gruppe von Windenergieanlage in der Regel bessere Windbedingungen herrschen als am Standort der ersten Windenergieanlage.

Das erfindungsgemäße Verfahren kann durchgeführt werden mit einer Gruppe von Windenergieanlagen, die über denselben Netzeinspeisungspunkt an ein Übertragungsnetz eines Netzbetreibers angeschlossen sind. Die Übertragung der elektrischen Leistung von einzelnen Windenergieanlagen der Gruppe bis zu dem Netzeinspeisungspunkt kann über ein windparkinternes Netz erfolgen. Windenergieanlagen, die an einen gemeinsamen Netzeinspeisungspunkt angeschlossen sind, sind normalerweise in einer räumlichen Nähe zueinander angeordnet. Durch die für den zukünftigen Wartungszeitraum vorhergesagten Windverhältnisse werden die Windenergieanlagen der Gruppe in vielen Fällen in vergleichbarer Weise betroffen sein. Ist die vorhergesagte Windgeschwindigkeit so hoch, dass eine oder mehrere Windenergieanlagen der Gruppe eine Boostleistung zur Verfügung stellen können, so wird der Leistungsausfall bei der ersten Windenergieanlage häufig der Nennleistung der ersten Windenergieanlage entsprechen.

In einer alternativen Ausführungsform kann das Verfahren so durchgeführt werden, dass die erste Windenergieanlage über einen ersten Netzeinspeisungspunkt an ein Übertragungsnetz eines Netzbetreibers angeschlossen ist und dass von der Gruppe Windenergieanlagen umfasst sind, die über einen davon verschiedenen zweiten Netzeinspeisungspunkt an ein Übertragungsnetz eines Netzbetreibers angeschlossen sind. Möglich ist, dass außer der ersten Windenergieanlage alle Windenergieanlagen der Gruppe über den zweiten Netzeinspeisungspunkt an das Übertragungsnetz angeschlossen sind. Möglich ist auch, dass ein Teil der Windenergieanlagen der Gruppe gemeinsam mit der ersten Windenergieanlage über den ersten Netzeinspeisungspunkt an das Übertragungsnetz angeschlossen ist.

Bei der Einspeisung über mehrere Netzeinspeisungspunkte haben die Windenergieanlagen der Gruppe häufig einen größeren räumlichen Abstand zueinander. Beispielsweise ist möglich, dass bei den an den ersten Netzeinspeisungspunkt angeschlossenen Windenergieanlagen die Windgeschwindigkeit kleiner ist als Nennwindgeschwindigkeit und dass bei den an den zweiten Netzeinspeisungspunkt angeschlossenen Windenergieanlagen die Windgeschwindigkeit größer ist als Nennwindgeschwindigkeit. Nur über den zweiten Netzeinspeisungspunkt kann dann Boostleistung zur Verfügung gestellt werden. Der zweite Netzeinspeisungspunkt kann so gestaltet sein, dass die zulässige Leistung, die über den zweiten Netzeinspeisungspunkt eingespeist werden kann, um eine Überleistung größer ist als die Summe der Nennleistungen der an den zweiten Netzeinspeisungspunkt angeschlossenen Windenergieanlagen. Nur unter dieser Voraussetzung ist es möglich, eine Boostleistung zur Verfügung zu stellen, die über die Summe der Nennleistungen hinausgeht. Die Überleistung kann größer sein als der durch den Wartungsvorgang bei der ersten Windenergieanlage zu erwartende Leistungsausfall. In einer Ausführungsform ist die Überleistung größer als die Nennleistung der ersten Windenergieanlage.

In einer Ausführungsform ist die erste Windenergieanlage an den ersten Netzeinspeisungspunkt angeschlossen und die Gruppe von Windenergieanlagen umfasst insgesamt mehr als zwei Netzeinspeisungspunkte, beispielsweise mindestens 3, vorzugsweise mindestens 5, weiter vorzugsweise mindestens 10 Netzeinspeisungspunkte. Die Summe der bei den anderen Netzeinspeisungspunkten (außerdem ersten Netzeinspeisungspunkt) möglichen Überleistungen kann größer sein als der durch den Wartungsvorgang bei der ersten Windenergieanlage zu erwartende Leistungsausfall, insbesondere größer sein als die Nennleistung der ersten Windenergieanlage.

Die Gruppe von Windenergieanlagen kann wenigstens 10, vorzugsweise wenigstens 50, weiter vorzugsweise wenigstens 200 Windenergieanlagen umfassen. Das Verfahren kann so durchgeführt werden, dass in dem Wartungszeitraums wenigstens 5, vorzugsweise wenigstens 10, weiter vorzugsweise wenigstens 20 Windenergieanlagen Boostleistung bereitstellen. Die zur Verfügung stehende Boostleistung kann vollständig oder teilweise abgerufen werden.

Wird Boostleistung von einer Windenergieanlage abgerufen, so kann sich dies nachteilig auf die zu erwartende Restlebensdauer der Windenergieanlage auswirken. Windenergieanlagen können beispielsweise ausgelegt sein für eine Gesamtlebensdauer (zum Beispiel 20 Jahre), von denen ein Anteil (zum Beispiel 40 %) als Betrieb bei Nennleistung angenommen wird. Die Windenergieanlage kann einen Betriebszeitzähler aufweisen, die verschiedene Parameter des Betriebs der Windenergieanlage erfasst. Dazu können beispielsweise gehören die Gesamtbetriebszeit, der Anteil an Betriebszeit unter Nennleistung, die Anzahl an Startvorgängen, die Anzahl an Nothaltvorgängen und ähnliches. Die Abgabe von Boostleistung kann ebenfalls aufgezeichnet werden. Um eine einfache Aussage über die zu erwartende Restlaufzeit der Windenergieanlage machen zu können, kann der Betrieb unter Boostleistung auf geeignete Weise mit anderen Parametern gegengerechnet werden. Beispielsweise kann angenommen werden, dass die Belastung durch die Abgabe von Boostleistung einer bestimmten Zeitspanne unter Nennleistung entspricht. Der Zählwert, der die bislang abgegebene Nennleistung zählt, kann entsprechend erhöht werden. Dabei kann ein geeigneter Umrechnungsfaktor zugrunde gelegt werden. Beispielweise kann 1h Abgabe von Boostleistung umgerechnet werden in 10h Betrieb unter Nennleistung.

Die Nennleistung einer Windenergieanlage wird unter Bezugnahme auf bestimmte Normbedingungen definiert. Zu den Normbedingungen können außer der Windgeschwindigkeit andere Umgebungsbedingungen gehören, wie beispielsweise eine Windturbulenz oder eine Luftdichte. Es sind Umgebungsbedingungen denkbar, bei denen die Windenergieanlage zwar Nennleistung abgibt, aber dennoch geringer belastet ist, als es unter den Normbedingungen der Fall wäre. Grund dafür kann beispielsweise sein, dass die Windturbulenz geringer ist als in den Normbedingungen angenommen. In einer solchen Phase kann eine Windenergieanlage Boostleistung abgeben, ohne dass dies mit einem überproportionalen Abschlag bei der erwarteten Lebensdauer gegengerechnet werden müsste. Mit anderen Worten liegt die Boostleistung innerhalb eines Bemessungsrahmens der Auslegung. Für das erfindungsgemäße Verfahren ist es von Vorteil, wenn in dem Wartungszeitraum die Boostleistung innerhalb des Bemessungsrahmens der Auslegung von einer oder mehreren Windenergieanlagen abgerufen wird.

Die Erfindung betrifft außerdem eine Steuereinheit zum Durchführen eines Wartungsvorgangs bei einer ersten Windenergieanlage aus einer Gruppe von Windenergieanlagen. Die Steuereinheit ermittelt anhand einer Windprognose einen zukünftigen Wartungszeitraums, in dem eine Boostleistung der Gruppe von Windenergieanlagen größer ist als ein vorgegebener Schwellwert. Die Steuereinheit ist dazu ausgelegt, nach Beginn des Wartungszeitraums ein Steuersignal zu erzeugen, um die Leistung der ersten Windenergieanlage zu reduzieren und um eine Boostleistung von einer Mehrzahl von Windenergieanlagen aus der Gruppe von Windenergieanlagen abzurufen.

Die Erfindung betrifft außerdem ein System, umfassend eine Gruppe von Windenergieanlagen, ein Prognosemodul zum Bereitstellen von Vorhersagedaten für die Windverhältnisse und eine solche Steuereinheit. Die Komponenten des Systems sind dazu ausgelegt, gemäß der Erfindung zusammenzuwirken. Die Steuereinheit kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang der erfindungsgemäßen Steuereinheit beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Gruppe von Windenergieanlagen bei einer ersten Ausführungsform der Erfindung;
- Fig. 2:: eine schematische Darstellung eines zukünftigen Wartungszeitraums;
- Fig. 3:: eine Gruppe von Windenergieanlagen bei einer zweiten Ausführungsform der Erfindung;
- Fig. 4, 5:: die Ansicht gemäß Fig. 2 zu anderen Zeitpunkten;
- Fig. 6:: eine schematische Darstellung eines erfindungsgemäßen Systems.

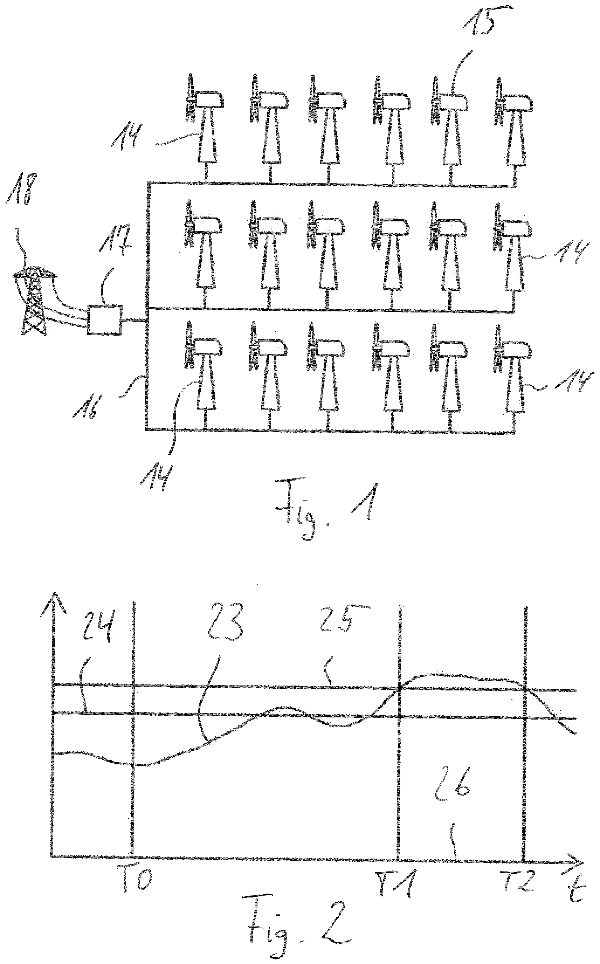

In Fig. 1 ist eine Gruppe von Windenergieanlagen 14, 15 dargestellt. Jede Windenergieanlage umfasst einen Generator, der über eine Rotorwelle an einen Rotor angeschlossen ist. Der Rotor, der durch den Wind in Drehung versetzt wird, treibt den Generator an, so dass elektrische Energie bereitgestellt wird.

Die Gruppe umfasst eine erste Windenergieanlage 15, bei der ein turnusgemäßer Wartungsvorgang ansteht. Die Windenergieanlagen 14, 15 sind an ein windparkinternes Netz 16 angeschlossen. An einem Netzeinspeisungspunkt 17 wird die von den Windenergieanlagen 14, 15 bereitgestellte elektrische Energie in ein Übertragungsnetz 18 eingespeist.

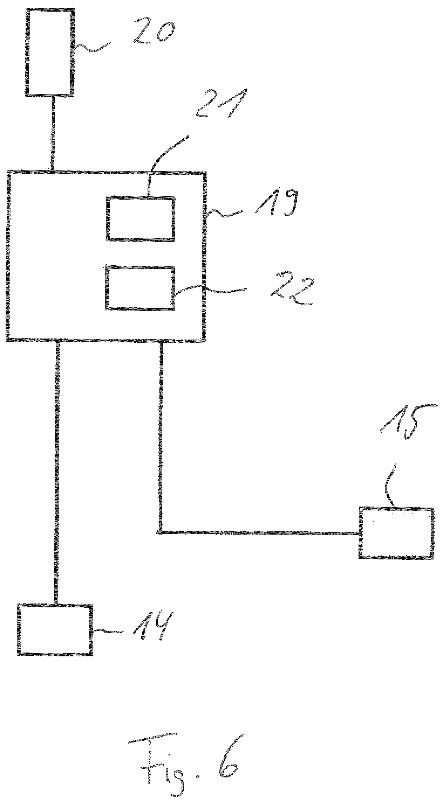

Ein erfindungsgemäßes System umfasst gemäß Fig. 6 eine Steuereinheit 19, die von einem Prognosemodul 20 eine Vorhersage über die Windverhältnisse zu einem zukünftigen Zeitpunkt erhält. Ein Rechenmodul 21 der Steuereinheit 19 verarbeitet die von dem Prognosemodul 20 erhaltenen Vorhersagedaten und prüft zunächst, ob es einen zukünftigen Zeitraum gibt, in dem die vorhergesagte Windgeschwindigkeit größer ist als die Nennwindgeschwindigkeit der Windenergieanlagen 14. Der Einfachheit halber wird angenommen, dass für alle Windenergieanlagen 14 dieselbe Windprognose gilt und dass alle Windenergieanlagen 14 die gleiche Nennwindgeschwindigkeit haben. Ist dies nicht der Fall, müssen separate Windprognosen herangezogen werden und einzeln mit den Nennwindgeschwindigkeiten der Windenergieanlagen 14 verglichen werden.

Hat das Rechenmodul 21 einen solchen zukünftigen Zeitraum ermittelt, wird in einem nächsten Schritt für jede Windenergieanlage 14 berechnet, welche Menge an Boostleistung die Windenergieanlage 14 in dem zukünftigen Zeitraum voraussichtlich wird erzeugen können. Aus der Summe der Einzel-Boostleistungen der einzelnen Windenergieanlagen 14, ergibt sich eine Gesamt-Boostleistung der Gruppe von Windenergieanlagen. Diese Gesamt-Boostleistung der Gruppe von Windenergieanlagen wird im Rahmen der Erfindung als Boostleistung bezeichnet.

Die Gesamt-Boostleistung wird mit einem vorgegebenen Schwellwert verglichen. Ist die Gesamt-Boostleistung größer als der vorgegebene Schwellwert, prüft das Rechenmodul 21 in einem nächsten Schritt, wie lange der Zeitraum ist, bis die Gesamt-Boostleistung wieder unter den vorgegebenen Schwellwert absinkt. Dazu werden die Vorhersagedaten für den sich unmittelbar anschließenden Zeitraum ausgewertet.

Steht die Länge des Zeitraums fest, werden die Daten über den Beginn des zukünftigen Zeitraums, das Ende des zukünftigen Zeitraums sowie die Menge der in dem zukünftigen Zeitraum voraussichtlich zur Verfügung stehenden Gesamt-Boostleistung an ein Planungsmodul 22 gesendet. Das Planungsmodul 22 vergleicht die Länge des zukünftigen Zeitraums mit der Zeitspanne, die für die Durchführung des Wartungsvorgangs bei der ersten Windenergieanlage 15 erforderlich ist. Ist der zukünftige Zeitraum, in dem die oberhalb des vorgegebenen Schwellwerts liegende Boostleistung verfügbar ist, länger als die für den Wartungsvorgang erforderliche Zeitspanne, so legt das Planungsmodul 22 den zukünftigen Zeitraum als Wartungszeitraum 26 fest.

In Fig. 2 ist die Windgeschwindigkeit 23 über der Zeit t aufgetragen. Der aktuelle Zeitpunkt ist als T0 bezeichnet. Die Daten vor dem Zeitpunkt T0 sind gemessene Daten der tatsächlichen Windgeschwindigkeit. Die Daten nach dem Zeitpunkt T0 entsprechen den Vorhersagedaten des Prognosemoduls 20. Vor dem Zeitpunkt T0 war die tatsächliche Windgeschwindigkeit 23 kontinuierlich kleiner als die Nennwindgeschwindigkeit 24. Gemäß den Vorhersagedaten ist nach dem Zeitpunkt T0 mit einem Anstieg der Windgeschwindigkeit 23 zu rechnen, mit dem die Nennwindgeschwindigkeit 24 kurzfristig überschritten wird. Nach einem kurzen Absinken unter die Nennwindgeschwindigkeit 24 steigt die Windgeschwindigkeit gemäß den Vorhersagedaten für einen längeren Zeitraum über die Nennwindgeschwindigkeit 24 hinaus an.

Zum Zeitpunkt T1 ist die Windgeschwindigkeit 23 erstmalig größer als ein Schwellwert 25, ab dem die mit dem Rechenmodul 21 ermittelte Boostleistung der Gruppe von Windenergieanlagen größer ist als die Nennleistung der Windenergieanlage 15. Der Schwellwert 25 entspricht dem vorgegebenen Schwellwert für die Boostleistung. Gemäß den Vorhersagedaten endet der Zeitraum, in dem die Boostleistung größer ist als der vorgegebene Schwellwert, zum Zeitpunkt T2.

Das Planungsmodul 22 stellt fest, dass der Zeitraum zwischen den Zeitpunkten T1 und T2 länger ist als die für den Wartungsvorgang bei der Windenergieanlage 15 erforderliche Zeitspanne oder dass die für den Wartungsvorgang erforderliche Zeitspanne wenigstens zu einem hinreichenden Anteil überdeckt werden kann. Der Zeitraum wird als Wartungszeitraum 26 festgelegt.

Zu Beginn des Wartungszeitraums 26 sendet die Steuereinheit 19 einen Steuerbefehl an die erste Windenergieanlage 15, gemäß dem die Windenergieanlage 15 heruntergefahren wird und zum Stillstand gebracht wird. Gleichzeitig geht ein Steuersignal an die anderen Windenergieanlagen 14 der Gruppe, gemäß denen die Windenergieanlagen 14 die abgegebene Leistung über die Nennleistung hinaus erhöhen. Die sich daraus ergebende Boostleistung der Windenergieanlagen 14 entspricht gerade dem Leistungsausfall, der sich durch den Stillstand der ersten Windenergieanlage 15 ergibt.

In dem Wartungszeitraum 26 kann ein Servicetechniker, der sich vor Ort bei der ersten Windenergieanlage 15 befindet, den turnusgemäßen Wartungsvorgang durchführen. Der Wartungsvorgang ist vor dem Zeitpunkt T2 abgeschlossen. Der Servicetechniker sendet eine Nachricht über den Abschluss des Wartungsvorgangs an die Steuereinheit 19. Die Steuereinheit 19 sendet ein Steuersignal an die erste Windenergieanlage 15, den Betrieb wieder aufzunehmen. Im Gegenzug zu der von der ersten Windenergieanlage 15 eingespeisten elektrischen Leistung wird die Boostleistung der Windenergieanlagen 14 reduziert, bis alle Windenergieanlagen 14, 15 wieder in den normalen Betrieb zurückgekehrt sind.

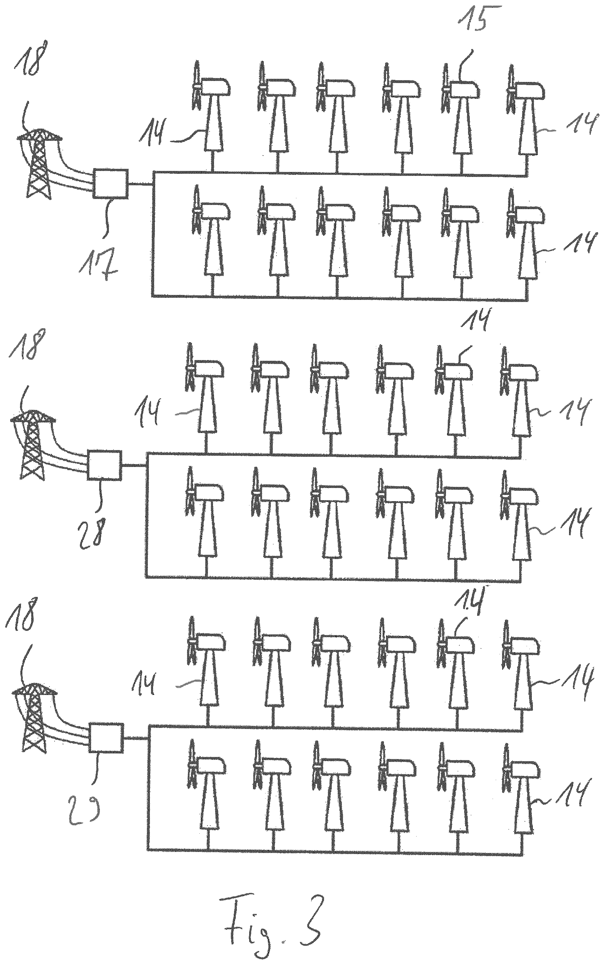

In Fig. 3 ist eine Ausführungsform dargestellt, bei der die Windenergieanlagen 14, 15 ihre elektrische Energie über verschiedene Netzeinspeisungspunkte 17, 28, 29 in das Übertragungsnetz 18 einspeisen. Die Netzeinspeisungspunkte 17, 28, 29 sind räumlich voneinander entfernt, so dass die Windverhältnisse voneinander abweichen. Die Steuereinheit 19 erhält Vorhersagedaten für alle Windenergieanlagen 14, 15 und versucht, einen günstigen Wartungszeitraum 26 für die Wartung der ersten Windenergieanlage 15 zu ermitteln. Günstig wäre beispielsweise ein Wartungszeitraum, bei dem die an den ersten Netzeinspeisungspunkt 17 angeschlossenen Windenergieanlagen 14, 15 einer Windgeschwindigkeit ausgesetzt sind, die kleiner ist als Nennwindgeschwindigkeit. Der durch das Stilllegen der ersten Windenergieanlage 15 zu erwartende Leistungsausfall ist dann kleiner als die Nennleistung der ersten Windenergieanlage 15. Gleichzeitig könnte bei den an den zweiten Netzeinspeisungspunkt 28 angeschlossenen Windenergieanlagen 14 die Windgeschwindigkeit größer sein als Nennwindgeschwindigkeit, so dass eine hinreichende Menge an Boostleistung zur Verfügung steht, um den Leistungsausfall bei der ersten Windenergieanlage 15 auszugleichen.

Es kann dann ein Wartungszeitraum 26 festgelegt werden, in dem der Wartungsvorgang bei der ersten Windenergieanlage 15 durchgeführt wird und der Leistungsausfall durch Boostleistung von den an den zweiten Netzeinspeisungspunkt 28 angeschlossenen Windenergieanlagen 14 ausgeglichen wird. Dies ist unabhängig davon, wie die Windverhältnisse bei den an den dritten Einspeisepunkt 29 angeschlossenen Windenergieanlagen 14 sind. Wäre dort Flaute, so dass alle an den dritten Netzeinspeisungspunkt 29 angeschlossenen Windenergieanlagen 14 im Stillstand sind, würde dies nichts daran ändern, dass der Leistungsausfall von der ersten Windenergieanlage 15 über an dem zweiten Netzeinspeisungspunkt 28 zur Verfügung gestellte Boostleistung ausgeglichen werden kann. Möglich sind auch andere Konstellationen, bei denen beispielsweise über beide Netzeinspeisungspunkt 28, 29 oder nur über den dritten Netzeinspeisungspunkt 29 Boostleistung eingespeist wird.

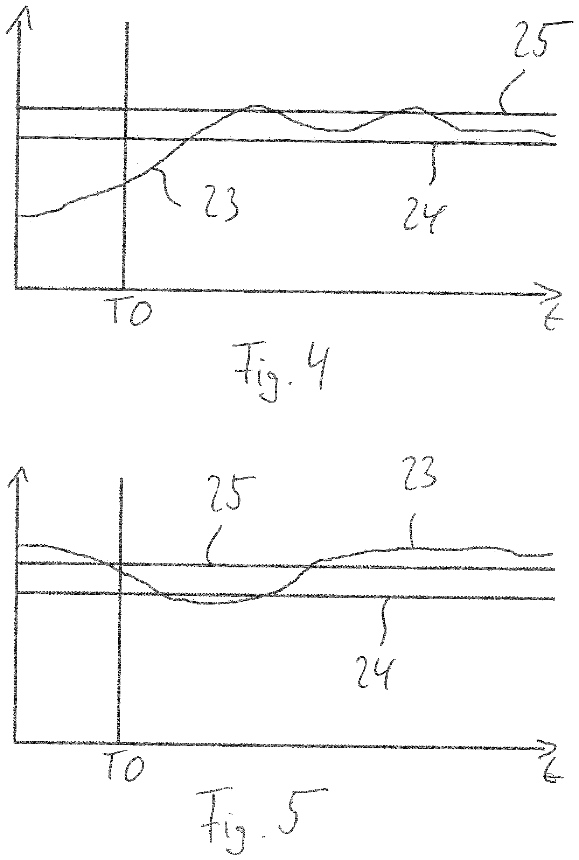

In den Fig. 4 und 5 sind zwei Beispiele dargestellt, bei denen die Steuereinheit 15 anhand der zum Zeitpunkt T0 zur Verfügung stehenden Vorhersagedaten kein Wartungszeitraum 26 festgelegt werden kann. In Fig. 4 wird der Schwellwert 25 zwar zweimal überschritten. Der jeweilige Zeitraum ist aber kürzer als die für den Wartungsvorgang bei der ersten Windenergieanlage 15 erforderliche Zeitspanne. In Fig. 5 ist der Zeitraum, in dem der Schwellwert 25 überschritten wird, zwar lang genug. Es wird aber z.B. eine so hohe Turbulenz (oder ein anderer Bemessungswert mit Einfluss auf die Belastung der Windenergieanlage) vorhergesagt, dass die Windenergieanlagen 14 durch das Abrufen von Boostleistung zu stark belastet würden. In beiden Fällen wird der Wartungszeitraum 26 zu einem späteren Zeitpunkt festgelegt, zu dem die Vorhersagedaten günstiger sind.

## Patentansprüche

1. Verfahren zum Warten einer ersten Windenergieanlage (15) aus einer Gruppe von Windenergieanlagen (14, 15) mit folgenden Schritten:
a. Ermitteln eines zukünftigen Wartungszeitraums (26), in dem eine Boostleistung der Gruppe von Windenergieanlagen (14, 15) größer ist als ein vorgegebener Schwellwert, wobei die Boostleistung sich aus einer für den zukünftigen Wartungszeitraum (26) vorhergesagten Windgeschwindigkeit (23) ergibt, die größer ist als Nennwindgeschwindigkeit (24);
b. Reduzieren der Leistung der ersten Windenergieanlage (15) nach Beginn des Wartungszeitraums und Abrufen einer Boostleistung von einer Mehrzahl von Windenergieanlagen (14) aus der Gruppe von Windenergieanlagen (14, 15);
c. Durchführen eines Wartungsvorgangs bei der ersten Windenergieanlage (15).

2. Verfahren nach Anspruch 1, **dadurch gekennzeichnet, dass** ein zukünftiger Wartungszeitraum (26) ermittelt wird, in dem die vorhergesagten Umgebungsbedingungen bei wenigstens einer Windenergieanlage (15) günstiger sind als die bei der Auslegung der Windenergieanlage (15) angenommenen Normbedingungen und dass die Boostleistung von der Windenergieanlage (15) innerhalb eines Bemessungsrahmens der Auslegung abgerufen wird.

3. Verfahren nach Anspruch 1 oder 2, **dadurch gekennzeichnet, dass** ein zukünftiger Wartungszeitraum (26) ermittelt wird, in dem die vorhergesagte Windturbulenz, ein vertikaler und/oder horizontaler Windgradient, ein Upflow, die Nachlaufbedingungen in der Gruppe von Windenergieanlagen (wake) und/oder die Luftdichte gering sind.

4. Verfahren nach einem der Ansprüche 1 bis 3, **dadurch gekennzeichnet, dass** die erste Windenergieanlage (15) nach Beginn des Wartungszeitraums (26) zum Stillstand gebracht wird.

5. Verfahren nach einem der Ansprüche 1 bis 4, **dadurch gekennzeichnet, dass** zwischen einem Zeitpunkt (T0), zu dem der zukünftige Wartungszeitraum (26) ermittelt wird, und dem Beginn des Wartungszeitraums (26) ein Wartungsplan erstellt wird, der für die erste Windenergieanlage (15) einen in dem zukünftigen Wartungszeitraum (26) durchzuführenden Wartungsvorgang festlegt.

6. Verfahren nach einem der Ansprüche 1 bis 5, **dadurch gekennzeichnet, dass** der vorgegebene Schwellwert für die Boostleistung in ein Verhältnis gesetzt wird zu dem während des Wartungszeitraums (26) zu erwartenden Leistungsausfall bei der ersten Windenergieanlage (15).

7. Verfahren nach Anspruch 6, **dadurch gekennzeichnet, dass** der vorgegebene Schwellwert so gewählt wird, dass er wenigstens 40 %, vorzugsweise zu wenigstens 80 %, weiter vorzugsweise zu wenigstens 100 % des zu erwartenden Leistungsausfalls bei der ersten Windenergieanlage (15) entspricht.

8. Verfahren nach einem der Ansprüche 1 bis 7, **dadurch gekennzeichnet, dass** ein zukünftiger Wartungszeitraum (26) ermittelt wird, in dem der zu erwartende Leistungsausfall der ersten Windenergieanlage (15) kleiner ist als die Nennleistung der ersten Windenergieanlage (15).

9. Verfahren nach einem der Ansprüche 1 bis 8, **dadurch gekennzeichnet, dass** der zukünftige Wartungszeitraum (26) so ausgewählt wird, dass während wenigstens 40%, vorzugsweise während wenigstens 60%, weiter vorzugsweise während wenigstens 80% der Dauer des Wartungsvorgangs die Boostleistung größer ist als der vorgegebene Schwellwert.

10. Verfahren nach einem der Ansprüche 1 bis 9, **dadurch gekennzeichnet, dass** die erste Windenergieanlage (15) über einen ersten Netzeinspeisungspunkt (17) an ein Übertragungsnetz (18) angeschlossen ist und dass von der Gruppe Windenergieanlagen (14) umfasst sind, die über einen zweiten Netzeinspeisungspunkt (28, 29) an ein Übertragungsnetz (18) angeschlossen sind.

11. Verfahren nach Anspruch 10, **dadurch gekennzeichnet, dass** die zulässige Leistung, die über den zweiten Netzeinspeisungspunkt (28, 29) eingespeist werden kann, um eine Überleistung größer ist als die Summe der Nennleistungen der an den zweiten Netzeinspeisungspunkt (28, 29) angeschlossenen Windenergieanlagen (14).

12. Steuereinheit zum Durchführen eines Wartungsvorgangs gemäß des Verfahrens von Anspruch 1 bei einer ersten Windenergieanlage (15) aus einer Gruppe von Windenergieanlagen (14, 15), wobei die Steuereinheit (19) anhand einer Windprognose einen zukünftigen Wartungszeitraums (26) ermittelt, in dem eine Boostleistung der Gruppe von Windenergieanlagen (14, 15) größer ist als ein vorgegebener Schwellwert, wobei die Steuereinheit (19) dazu ausgelegt ist, nach Beginn des Wartungszeitraums (26) ein Steuersignal zu erzeugen, um die Leistung der ersten Windenergieanlage (15) zu reduzieren und um eine Boostleistung von einer Mehrzahl von Windenergieanlagen (14) aus der Gruppe von Windenergieanlagen (14, 15) abzurufen.

## Claims

1. Method for the maintenance of a first wind energy installation (15) from a group of wind energy installations (14, 15) comprising the following steps:
a. identifying a future maintenance time period (26) in which a boost power of the group of wind energy installations (14, 15) is greater than a prescribed threshold value, wherein the boost power results from a wind speed (23) predicted for the future maintenance time period (26), said wind speed being greater than a rated wind speed (24);
b. reducing the power of the first wind energy installation (15) after the start of the maintenance time period and drawing a boost power from a plurality of wind energy installations (14) from the group of wind energy installations (14, 15);
c. carrying out a maintenance process at the first wind energy installation (15).

2. Method according to Claim 1, **characterized in that** a future maintenance time period (26) is identified in which the predicted environmental conditions at at least one wind energy installation (15) are more favorable than the standard conditions assumed in the design of the wind energy installation (15) and **in that** the boost power is drawn from the wind energy installation (15) within a measurement range of the design.

3. Method according to Claim 1 or 2, **characterized in that** a future maintenance time period (26) is identified in which the predicted wind turbulence, a vertical and/or horizontal wind gradient, an upflow, the wake conditions in the group of wind energy installations and/or the air density are low.

4. Method according to one of Claims 1 to 3, **characterized in that** the first wind energy installation (15) is brought to a standstill after the start of the maintenance time period (26).

5. Method according to one of Claims 1 to 4, **characterized in that**, between a time (T0) at which the future maintenance time period (26) is identified and the start of the maintenance time period (26), a maintenance plan is created, which determines a maintenance process to be carried out in the future maintenance time period (26) for the first wind energy installation (15).

6. Method according to one of Claims 1 to 5, **characterized in that** the prescribed threshold value for the boost power is related to the power loss to be expected at the first wind energy installation (15) during the maintenance time period (26).

7. Method according to Claim 6, **characterized in that** the prescribed threshold value is selected so that it corresponds to at least 40%, preferably at least 80%, further preferably at least 100% of the power loss to be expected at the first wind energy installation (15).

8. Method according to one of Claims 1 to 7, **characterized in that** a future maintenance time period (26) is identified in which the power loss of the first wind energy installation (15) to be expected is lower than the rated power of the first wind energy installation (15).

9. Method according to one of Claims 1 to 8, **characterized in that** the future maintenance time period (26) is selected so that the boost power is greater than the prescribed threshold value over at least 40%, preferably over at least 60%, further preferably over at least 80% of the duration of the maintenance process.

10. Method according to one of Claims 1 to 9, **characterized in that** the first wind energy installation (15) is connected to a transmission network (18) via a first network infeed point (17) and **in that** the group comprises wind energy installations (14) that are connected to a transmission network (18) via a second network infeed point (28, 29).

11. Method according to Claim 10, **characterized in that** the permissible power that can be fed in via the second network infeed point (28, 29) is greater by an excess power than the sum of the rated powers of the wind energy installations (14) connected to the second network infeed point (28, 29).

12. Control unit for carrying out a maintenance process according to the method of Claim 1 at a first wind energy installation (15) from a group of wind energy installations (14, 15), wherein the control unit (19) identifies, based on a wind prediction, a future maintenance time period (26) in which a boost power of the group of wind energy installations (14, 15) is greater than a prescribed threshold value, wherein the control unit (19) is designed to generate a control signal after the start of the maintenance time period (26) in order to reduce the power of the first wind energy installation (15) and to draw a boost power from a plurality of wind energy installations (14) from the group of wind energy installations (14, 15).

## Revendications

1. Procédé de maintenance d'un premier aérogénérateur (15) d'un groupe d'aérogénérateurs (14, 15), comprenant les étapes suivantes :
a. détermination d'une future période de maintenance (26), dans laquelle une puissance amplifiée du groupe d'aérogénérateurs (14, 15) est supérieure à une valeur de seuil prédéfinie, la puissance amplifiée résultant d'une vitesse du vent (23) prédite pour la future période de maintenance (26), laquelle est supérieure à la vitesse du vent nominale (24) ;
b. réduction de la puissance du premier aérogénérateur (15) après le début de la période de maintenance et invocation d'une puissance amplifiée d'une pluralité d'aérogénérateurs (14) du groupe d'aérogénérateurs (14, 15) ;
c. réalisation d'une opération de maintenance sur le premier aérogénérateur (15).

2. Procédé selon la revendication 1, **caractérisé en ce qu'**une future période de maintenance (26) est déterminée, dans laquelle les conditions environnantes prédites au niveau d'au moins un aérogénérateur (15) sont plus favorables que les conditions normalisées prises pour hypothèse lors de la conception de l'aérogénérateur (15) et **en ce que** la puissance amplifiée est invoquée de l'aérogénérateur (15) au sein d'un espace assigné de la conception.

3. Procédé selon la revendication 1 ou 2, **caractérisé en ce qu'**une future période de maintenance (26) est déterminée, dans laquelle la turbulence du vent prédite, un gradient de vent vertical et/ou horizontal, un flux montant, les conditions de fonctionnement par inertie dans le groupe d'aérogénérateurs (wake) et/ou la densité de l'air sont faibles.

4. Procédé selon l'une des revendications 1 à 3, **caractérisé en ce que** le premier aérogénérateur (15) est immobilisé après le début de la période de maintenance (26) .

5. Procédé selon l'une des revendications 1 à 4, **caractérisé en ce qu'**un plan de maintenance est créé entre l'instant (T0) auquel est déterminée la future période de maintenance (26) et le début de la période de maintenance (26), lequel spécifie une opération de maintenance à effectuer dans la future période de maintenance (26) pour le premier aérogénérateur (15).

6. Procédé selon l'une des revendications 1 à 5, **caractérisé en ce que** la valeur de seuil prédéfinie pour la puissance amplifiée est mise en rapport avec la chute de puissance à attendre au niveau du premier aérogénérateur (15) pendant la période de maintenance (26) .

7. Procédé selon la revendication 6, **caractérisé en ce que** la valeur de seuil prédéfinie est choisie de telle sorte qu'elle correspond à au moins 40 %, de préférence à au moins 80 %, encore de préférence à au moins 100 % de la chute de puissance à attendre au niveau du premier aérogénérateur (15).

8. Procédé selon l'une des revendications 1 à 7, **caractérisé en ce qu'**une future période de maintenance (26) est déterminée, dans laquelle la chute de puissance à attendre du premier aérogénérateur (15) est inférieure à la puissance nominale du premier aérogénérateur (15).

9. Procédé selon l'une des revendications 1 à 8, **caractérisé en ce que** la future période de maintenance (26) est choisie de telle sorte que pendant au moins 40 %, de préférence pendant au moins 60 %, encore de préférence pendant au moins 80 % de la durée de l'opération de maintenance, la puissance amplifiée est supérieure à la valeur de seuil prédéfinie.

10. Procédé selon l'une des revendications 1 à 9, **caractérisé en ce que** le premier aérogénérateur (15) est raccordé à un réseau de transmission (18) par le biais d'un premier point d'injection au réseau (17) et **en ce que** le groupe inclut des aérogénérateurs (14) qui sont raccordés à un réseau de transmission (18) par le biais d'un deuxième point d'injection au réseau (28, 29).

11. Procédé selon la revendication 10, **caractérisé en ce que** la puissance admissible, qui peut être injectée par le biais du deuxième point d'injection au réseau (28, 29), est supérieure d'une surpuissance à la somme des puissances nominales des aérogénérateurs (14) raccordés au deuxième point d'injection au réseau (28, 29).

12. Unité de commande destinée à mettre en œuvre une opération de maintenance conformément au procédé selon la revendication 1 sur un premier aérogénérateur (15) d'un groupe d'aérogénérateurs (14, 15), l'unité de commande (19) déterminant, à l'aide d'une prévision de vent, une future période de maintenance (26), dans laquelle une puissance amplifiée du groupe d'aérogénérateurs (14, 15) est supérieure à une valeur de seuil prédéfinie, l'unité de commande (19) étant conçue pour générer, après le début de la période de maintenance (26), un signal de commande afin de réduire la puissance du premier aérogénérateur (15) et afin d'invoquer une puissance amplifiée d'une pluralité d'aérogénérateurs (14) du groupe d'aérogénérateurs (14, 15) .
